(19) Europäisches Patentamt
European Patent Office
Office européen des brevets

(11) EP 3 881 926 A1

(12) **EUROPEAN PATENT APPLICATION**
published in accordance with Art. 153(4) EPC

(43) Date of publication:
**22.09.2021 Bulletin 2021/38**

(21) Application number: **20747621.9**

(22) Date of filing: **17.01.2020**

(51) Int Cl.:
***B01D 63/02*** (2006.01) ***B01D 69/02*** (2006.01)
***B01D 69/08*** (2006.01) ***B01D 71/26*** (2006.01)
***B01D 71/28*** (2006.01) ***B01D 71/30*** (2006.01)
***B01D 71/34*** (2006.01) ***B01D 71/38*** (2006.01)
***B01D 71/40*** (2006.01) ***B01D 71/42*** (2006.01)
***B01D 71/44*** (2006.01) ***B01D 71/48*** (2006.01)
***B01D 71/50*** (2006.01) ***B01D 71/52*** (2006.01)
***B01D 71/54*** (2006.01) ***B01D 71/56*** (2006.01)
***B01D 71/68*** (2006.01) ***D01F 1/08*** (2006.01)
***A61M 1/18*** (2006.01)

(86) International application number:
**PCT/JP2020/001475**

(87) International publication number:
**WO 2020/158451 (06.08.2020 Gazette 2020/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.01.2019 JP 2019012854**

(71) Applicant: **Toray Industries, Inc.**
**Tokyo, 103-8666 (JP)**

(72) Inventors:
- **USHIRO, Suguru**
**Otsu-shi, Shiga 520-8558 (JP)**
- **HAYASHI, Akihiro**
**Otsu-shi, Shiga 520-8558 (JP)**
- **SAKAGUCHI, Hirokazu**
**Otsu-shi, Shiga 520-8558 (JP)**

(74) Representative: **Prüfer & Partner mbB**
**Patentanwälte · Rechtsanwälte**
**Sohnckestraße 12**
**81479 München (DE)**

(54) **SEPARATION MEMBRANE MODULE**

(57) A separation membrane module includes a case and a separation membrane built in the case, wherein the separation membrane module satisfies the following requirements (1) to (3): (1) the separation membrane contains a hydrophobic polymer, a hydrophilic polymer, and a biocompatible copolymer, the hydrophilic polymer containing a hydrophilic polymer having mobility, (2) the separation membrane contains the hydrophilic polymer having mobility in a range of 1.0 to 1.7% by mass, and (3) a water content per self-weight of the separation membrane is in a range of 0 to 10% by mass. The separation membrane module is provided in which fouling of a membrane is suppressed and the amount of eluted substance is small.

EP 3 881 926 A1

## Description

[Technical Field]

The present invention relates to a separation membrane module in which a separation membrane is built into a container.

[Background Art]

In recent years, separation of substances using a separation membrane module, in which a separation membrane is built into a case, has been increasingly employed. Examples of its medical applications include an artificial kidney used in a dialysis therapy, a plasma separator used in a plasma exchange therapy, and the like. Meanwhile, examples of its water treatment applications include a reverse osmosis membrane module and a microfiltration module, which are used to remove salt and toxins from water, and the like. Further, a separation membrane is also used to remove bacteria, viruses, cells, etc., in manufacturing and purification applications of foods and pharmaceuticals.
Examples of the separation membrane modules include a wet-type one in which a case is filled with a liquid and a separation membrane is completely filled with the liquid; a semi-dry-type one in which only a separation membrane is wetted, while a case is not filled with a liquid; and a dry-type one in which a case is not filled with a liquid and a separation membrane scarcely contains water. Of these, the dry-type one has advantages such as a light weight and little possibility of degradation of performance due to freezing even in cold districts, because of containing no water.
A hydrophobic polymer with excellent chemical resistance and strength is used as the material for the separation membrane. However, the hydrophobic polymer has low blood compatibility due to its strong hydrophobicity, which becomes a problem when blood is used as a liquid to be treated in the medical application. In other words, when the blood comes into contact with the surface of the hydrophobic polymer, activation of blood causes blood coagulation and significant fouling of the membrane. Therefore, attempts have been made to suppress blood coagulation and fouling of the membrane by adding a hydrophilic polymer to the hydrophobic polymer to improve the hydrophilicity of the separation membrane surface and to make blood compatibility better.
When the hydrophilic polymer is simply added to the separation membrane, there is a risk that it may be leached out as an eluted substance. For this reason, any methods of immobilizing the hydrophilic polymer to the separation membrane are generally adopted. Of these, there is a common method in which the immobilization is carried out by cross-linking the hydrophilic polymer with the separation membrane through heat or radiation treatment (for example, Patent Literatures 1 to 3). There is also disclosed a method in which a separation membrane is washed with a hydrophilic polymer such as polyvinyl alcohol, and then the hydrophilic polymer is immobilized to the separation membrane by irradiation with $\gamma$-rays in a state where the separation membrane is dried (for example, Patent Literature 4).

[Citation List]

[Patent Literature]

[Patent Literature 1]
JP 5-3331 B
[Patent Literature 2]
JP 2011-92928 A
[Patent Literature 3]
WO 2018/062451 A
[Patent Literature 4]
WO 2014/129373 A

[Summary of Invention]

[Technical Problem]

According to the methods mentioned in Patent Literatures 1 to 3, the hydrophilic polymer is immobilized to the membrane material and becomes insoluble, thus enabling suppression of the elution of the hydrophilic polymer. However, there is a concern about these methods that the hydrophilic polymer on a surface in contact with the liquid to be treated may not exhibit a hydrophilic effect sufficiently because its mobility is reduced by cross-linking. In the method of cross-linking by radiation, irradiating with radiation in the presence of water is important for promoting the cross-linking, which is unsuitable for the manufacture of a dry-type separation membrane module.

According to the method mentioned in Patent Literature 4, it is possible to fabricate a dry-type separation membrane module with less eluted substances. However, there is still room for improvement in the low fouling property of the membrane.

An object of the present invention is to improve the disadvantages of such conventional technology and to provide a separation membrane module in which fouling of a membrane is suppressed and the amount of eluted substance is small.

[Solution to Problem]

A separation membrane module of the present invention has the following configuration.

That is, a separation membrane module includes a case and a separation membrane built in the case, wherein the separation membrane module satisfies the following requirements (1) to (3):

(1) the separation membrane contains a hydrophobic polymer, a hydrophilic polymer, and a biocompatible copolymer, the hydrophilic polymer containing a hydrophilic polymer having mobility,
(2) the separation membrane contains the hydrophilic polymer having mobility in a range of 1.0 to 1.7% by mass, and
(3) a water content per self-weight of the separation membrane is in a range of 0 to 10% by mass.

Further, the present invention is directed to a method for manufacturing a separation membrane module in which a separation membrane is built, the separation membrane containing a hydrophobic polymer, a hydrophilic polymer, and a biocompatible copolymer, the method including the steps of:

contacting a separation membrane containing the hydrophobic polymer and the hydrophilic polymer with a solution containing the biocompatible copolymer; and
then performing irradiation with radiation such that a water content per self-weight of the separation membrane is in a range of 0 to 10% by mass.

[Advantageous Effects of Invention]

According to the present invention, it is possible to obtain a separation membrane module in which fouling of a membrane is suppressed and the amount of eluted substance is small.

[Brief Description of the Drawings]

Fig. 1 is a schematic diagram showing an example of a separation membrane module according to the present invention.
Fig. 2 is a schematic diagram showing a device and a circuit used to measure changes in albumin sieving coefficient over time.

[Description of Embodiments]

The present invention relates to a separation membrane module in which a separation membrane is built into a case, wherein the separation membrane contains a hydrophobic polymer, a hydrophilic polymer, and a biocompatible copolymer, and the hydrophilic polymer further contains a hydrophilic polymer having mobility.

The term "hydrophobic polymer" refers to a polymer that has a solubility of 1 g or less per 100 g of pure water at 20°C when the weight-average molecular weight of the polymer is 10,000 or more and 50,000 or less. The solubility of the hydrophobic polymer is preferably 0.1 g or less, and more preferably 0.01 g or less.

The hydrophobic polymer is not particularly limited, but is preferably at least one selected from the group consisting of a polysulfone-based polymer, polystyrene, polyurethane, polyethylene, polypropylene, polycarbonate, polyvinylidene fluoride, polyacrylonitrile, polymethyl methacrylate, polyvinyl chloride, and polyester. Of these, the polysulfone-based polymer and polymethyl methacrylate are suitably used because they can easily form the separation membrane. Furthermore, the polysulfone-based polymer is suitably used because of high water permeability of the membrane. The hydrophobic polymer may be one that is commercially purchased or may be manufactured using a known method or a method based on such a method.

The term "polysulfone-based polymer" refers to a polymer having an aromatic ring, a sulfonyl group, and an ether group in the main chain, and examples thereof include polysulfone, polyether sulfone, polyallylether sulfone, and the like. For example, polysulfone-based polymers represented by the below-mentioned chemical formulas (1) and/or (2) are suitably used, but the polysulfone-based polymer is not limited thereto. The polysulfone-based polymer may be a copolymer or its modified substance which is copolymerized with a monomer other than the monomer corresponding to repeating units represented by the formulas (1) and/or (2) as long as the effects of the present invention are not impaired. The copolymerization ratio of the other monomer to the copolymer is preferably 10% by mass or less.

[Chemical Formula 1]

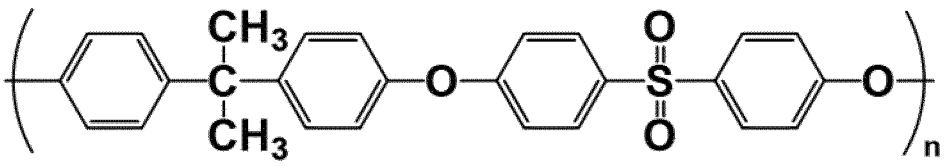

(1)

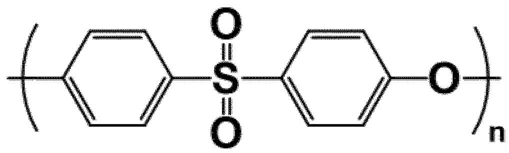

(2)

In the formulas, n is an integer of 1 or more and 200 or less, preferably 30 or more and 100 or less, and more preferably 50 or more and 80 or less. If n has a distribution, its average value is referred to as n.

Examples of the polysulfone-based polymer include Udel (registered trademark) polysulfone P-1700, P-3500 (manufactured by Solvay S.A.), "Ultrason (registered trademark)" S3010 or S6010 (manufactured by BASF Corporation), "Radel (registered trademark)" A (manufactured by Solvay S.A.), and "Ultrason (registered trademark)" E (manufactured by BASF Corporation).

The term "hydrophilic polymer" refers to a polymer that has a solubility of more than 1 g per 100 g of pure water at 20°C when the weight-average molecular weight of the polymer is 10,000 or more and 50,000 or less. The hydrophilic polymer preferably has a solubility of 10 g or more.

The hydrophilic polymer is preferably at least one selected from the group consisting of polyvinylpyrrolidone, polyethylene glycol, polyvinyl alcohol, and polyacrylamide. More preferably, the hydrophilic polymer is at least one hydrophilic polymer selected from the group consisting of polyvinylpyrrolidone, polyethylene glycol, and polyvinyl alcohol. Of these, from the viewpoint of compatibility and safety when used with the polysulfone-based polymer as the hydrophobic polymer, polyvinylpyrrolidone is suitably used. The hydrophilic polymer may be one that is commercially purchased or may be manufactured using a known method or a method based on such a method.

The term "biocompatible copolymer" refers to a copolymer that inhibits the adhesion, to a separation membrane, of a biological component contained in a liquid to be treated, when introduced into the separation membrane. Here, the biological component means a substance of biological origin such as sugar, proteins, or blood platelets. The target of measuring the adhesion of the biological component is preferably a substance contained in a body fluid such as blood, tear fluid, or a spinal fluid. Of these, a substance contained in blood is preferably applied as the target in the separation membrane for the medical applications.

The term "copolymer" refers to a polymer including two or more units. The unit refers to a repeating unit in a copolymer obtained by polymerizing monomers.

It is preferred that the biocompatible copolymer has a hydrocarbon group in its side chain, and that the number of carbon atoms of the hydrocarbon group is in a range of 2 to 7. The number of carbon atoms in the hydrocarbon group is more preferably in a range of 2 to 5, and still more preferably 2 to 4. If the number of carbon atoms of the hydrocarbon group is extremely small, the mobility of the copolymer may be reduced, and the adhesion of biological components may be increased. In contrast, if the number of carbon atoms of the hydrocarbon group is extremely large, the hydrophobicity of the copolymer is enhanced, leading to fouling of the membrane.

The term "side chain" refers to a molecular chain that branches off from the main chain of the relevant polymer unit. For example, for a vinyl butyrate unit, the side chain refers to $CH_3CH_2CH_2COO$-; for an ethyl acrylate unit, the side chain refers to $CH_3CH_2OCO$-; and for a methyl methacrylate unit, the side chain refers to $CH_3$- and $CH_3OCO$-. Examples of the unit that has a hydrocarbon group having 2 to 7 carbon atoms in its side chain include a vinyl propionate unit, a

vinyl butyrate unit, a vinyl pivalate unit, a vinyl pentanoate unit, an ethyl acrylate unit, a propyl acrylate unit, a butyl acrylate unit, an isobutyl acrylate unit, an ethyl methacrylate unit, a propyl methacrylate unit, a butyl methacrylate unit, an isobutyl methacrylate unit, or a tert-butyl methacrylate unit, a 1-butene unit, etc.

In the case where the biocompatible copolymer includes a plurality of units having different number of carbon atoms, the above condition is considered to be satisfied if the number of carbon atoms of the hydrocarbon group of the side chain in at least one of the units is within the above range. For example, a vinyl alcohol/ethyl methacrylate copolymer has a hydrocarbon group having 1 carbon atom (methyl group) and a hydrocarbon group having 2 carbon atoms (ethyl group) as side chains, which means that it has a hydrocarbon group having 2 to 7 carbon atoms in the side chain. In an N-methylacrylamide/isopropenyl acetate unit, all side chains thereof are hydrocarbon groups each having 1 carbon atom (methyl group), which means that there is no side chain having a hydrocarbon group having 2 to 7 carbon atoms.

The biocompatible copolymer is preferably a copolymer composed of a hydrophobic unit and a hydrophilic unit because it easily achieves a hydrophilic-hydrophobic balance throughout the entire copolymer.

The hydrophobic unit is defined as a repeating unit, in which a polymer (with a weight-average molecular weight of 10,000 or more and 50,000 or less) composed only of the repeating units is poorly soluble or insoluble in water. Here, the poorly soluble or insoluble in water means that the solubility is 1 g or less per 100 g of pure water at 20°C. Preferred examples of the hydrophobic unit include a vinyl carboxylate unit, an acrylic acid ester unit, a methacrylic acid ester unit, a styrene derivative unit, and the like.

The vinyl carboxylate unit is a unit having a carboxylic acid vinyl ester structure ($-CH_2-CH(OCO-R)-$) (wherein R is a hydrocarbon group and may contain a heteroatom). Examples of the vinyl carboxylate unit include a vinyl acetate unit, a vinyl propanoate unit, and the like.

The acrylic acid ester unit is a unit having an acrylic acid ester structure (-CH-C(CO-O-R)-) (wherein R is a hydrocarbon group and may contain a heteroatom). Examples of the acrylic acid ester unit include a methyl acrylate unit, an ethyl acrylate unit, a tert-butyl acrylate unit, and the like.

The methacrylic acid ester unit is a unit having a methacrylic acid ester structure ($-CH-C(CH_3)(CO-O-R)-$) (wherein R is a hydrocarbon group and may contain a heteroatom). Examples of the methacrylic acid ester unit include a methyl methacrylate unit, an isopropyl methacrylate unit, and the like.

The hydrophobic unit preferably has an ester group in order to suppress its hydrophobicity being extremely strong, and is more preferably a unit selected from a carboxylic acid ester unit, an acrylic acid ester unit, and a methacrylic acid ester unit. Of these, the carboxylic acid ester unit is preferred because it has less stimulating and activating effects on biological components such as blood cells. The carboxylic acid ester unit preferably has a hydrocarbon group at the end of the side chain having 2 to 7 carbon atoms, and is particularly preferable a vinyl propanoate unit, a vinyl butyrate unit, a vinyl pivalate unit, or a vinyl pentanoate unit. The acrylic acid ester unit preferably has a hydrocarbon group in the side chain having 2 to 4 carbon atoms, and is particularly preferable an ethyl acrylate unit, a propyl acrylate unit, a butyl acrylate unit, an isobutyl acrylate unit, or a tert-butyl acrylate unit. The methacrylic acid ester unit preferably has a hydrocarbon group in the side chain having 2 to 7 carbon atoms, and is particularly preferable an ethyl methacrylate unit, a propyl methacrylate unit, a butyl methacrylate unit, an isobutyl methacrylate unit, or a tert-butyl methacrylate unit.

Meanwhile, the hydrophilic unit is defined as a repeating unit, in which a polymer (with a weight-average molecular weight of 10,000 or more and 50,000 or less) composed only of the repeating units is easily soluble in water. Here, the expression of being easily soluble in water means that the solubility is more than 1 g per 100 g of pure water at 20°C. The hydrophilic unit preferably has a solubility of 10 g or more. Preferred examples of the hydrophilic unit include a vinylpyrrolidone unit, an acrylamide derivative unit, a methacrylamide derivative unit, a vinylacetamide derivative unit, and the like.

The vinylacetamide derivative unit is a unit having a vinylacetamide structure ($-CH-C(NR-CO-CH_3)-$) (wherein R is a hydrogen atom or a hydrocarbon group, and the hydrocarbon group may contain a heteroatom). Examples of the vinylacetamide derivative units include an N-vinylacetamide unit, an N-methyl-N-vinylacetamide unit, and the like.

The acrylamide derivative unit is a unit having an acrylamide structure ($-CH-C(CO-NR_1R_2)-$) (wherein $R_1$ and $R_2$ each independently represent a hydrogen atom or a hydrocarbon group, and the hydrocarbon group may contain a heteroatom). Examples of the acrylamide derivative unit include an acrylamide unit, an N-alkylacrylamide unit, and the like. Examples of the N-alkylacrylamide unit include an N-methylacrylamide unit, an N-isopropylacrylamide unit, an N-tert-butylacrylamide unit, and the like.

The methacrylamide derivative unit is a unit having a methacrylamide structure ($-CH-C(CH_3)(CO-NR_1R_2)-$) (wherein $R_1$ and $R_2$ each independently represent a hydrogen atom or a hydrocarbon group, and the hydrocarbon group may contain a heteroatom). Examples of the methacrylamide derivative unit include a methacrylamide unit, an N-isopropyl methacrylamide unit, and the like.

From the viewpoint of the copolymerizability of monomers, the biocompatible copolymer is preferably at least one selected from the group consisting of a vinylpyrrolidonevinyl carboxylate copolymer, an N-vinylacetamide-vinyl carboxylate copolymer, an N-alkylacrylamide/acrylic acid ester copolymer, and an N-alkylacrylamide/methacrylic acid ester copolymer.

Examples of the arrangement of the units in the biocompatible copolymer include a block copolymer, an alternating copolymer, a random copolymer, and the like. Of these, the alternating copolymer or random copolymer is preferred because of its high hydrophilic-hydrophobic balance and uniformity of mobility throughout the entire copolymer. Of these, the random copolymer is more preferable because it is less complicated to synthesize. A copolymer in which at least a portion of the arrangement of monomers is arranged disorderly is defined as the random copolymer.

In the biocompatible copolymer, the mole fraction of the hydrophilic unit relative to the entire biocompatible copolymer is preferably 30 to 90%. The lower limit of the mole fraction of the hydrophilic unit is more preferably 40% or more, and still more preferably 50% or more. The upper limit of the mole fraction of the hydrophilic unit is more preferably 80% or less, and still more preferably 70% or less. Any combination of any preferred lower limit and any preferred upper limit is desirable. If the mole fraction of the hydrophilic unit is in this range, it is preferable because neither the hydrophobicity nor the hydrophilicity of the entire copolymer is extremely strong, thus making it possible to suppress destabilization of the structure of proteins or blood platelets. A method for calculating the mole fraction involves, for example, performing $^1$H-nuclear magnetic resonance (NMR) measurement of the entire biocompatible copolymer, followed by calculation from a peak area. If the mole fraction cannot be calculated by $^1$H-NMR measurement due to overlapping of peaks or the like, the mole fraction may be calculated by an elemental analysis.

The weight-average molecular weight of the biocompatible copolymer is preferably 1,000 or more, and more preferably 5,000 or more. If the weight-average molecular weight of the biocompatible copolymer is in this range, it is preferable because it exhibits the inhibitory effect of adhesion of blood platelets and proteins. On the other hand, there is no particular limitation on the upper limit of the weight-average molecular weight of the biocompatible copolymer, but 1,000,000 or less is preferable, 500,000 or less is more preferable, and 100,000 or less is still more preferable. If the weight-average molecular weight of the biocompatible copolymer is in this range, it is preferable because the solubility in various solvents is adequate. It is noted that the weight-average molecular weight of the biocompatible copolymer can be measured by gel permeation chromatography (GPC), as mentioned below.

The hydrophilic polymers contain a hydrophilic polymer having mobility. The term "hydrophilic polymer having mobility" refers to a hydrophilic polymer that is not crosslinked by irradiation with radiation or the like and whose mobility is not restricted. In the present invention, as mentioned below, the hydrophilic polymer having mobility is defined as a polymer of the hydrophilic polymers that is extracted from the separation membrane by a mixed solvent of ethanol/tetrahydrofuran (50/50% by volume).

The separation membrane contains the hydrophilic polymer having mobility in the range of 1.0 to 1.7% by mass. If the content of the hydrophilic polymer having mobility is extremely small, the blood compatibility of the separation membrane becomes low, leading to significant fouling. Preferably, the separation membrane contains the hydrophilic polymer having mobility in an amount of 1.1% by mass or more, and more preferably in an amount of 1.2 % by mass or more.

On the other hand, if the content of the hydrophilic polymer having mobility is extremely large, the amount of eluted substance from the separation membrane may become large, or the membrane may be degraded during the contact with the blood, leading to an insufficient suppression of fouling. Preferably, the separation membrane contains the hydrophilic polymer having mobility in an amount of 1.6% by mass or less, and more preferably in an amount of 1.4% by mass or less.

In order to control the amount of hydrophilic polymer having mobility, it is important to control the cross-linking state of the hydrophilic polymer in the separation membrane. The higher the degree of cross-linking of the hydrophilic polymer is, the less the amount of hydrophilic polymer having mobility becomes, whereas the lower the degree of cross-linking is, the more the amount of hydrophilic polymer having mobility becomes. The cross-linking state of the hydrophilic polymer can be adjusted by the irradiation conditions with radiation or the like when immobilizing the polymer to the surface, as mentioned below.

Here, fouling refers to the adhesion of a biological component to the surface of a separation membrane, thus clogging the membrane. The low fouling property refers to the property in which the adhesion of the biological component is suppressed whereby clogging of the membrane is minimized. When representing this situation by an index, the term "low fouling property" is used.

The hydrophobic polymers can also contain a hydrophobic polymer having mobility. In the present invention, the hydrophobic polymer having mobility is defined as a polymer of the hydrophobic polymers that is extracted from the separation membrane by a mixed solvent of ethanol/tetrahydrofuran (50/50% by volume). The separation membrane contains the hydrophobic polymer having mobility preferably in an amount of 3.0% by mass or less, more preferably in an amount of 2.7% by mass or less, still more preferably in an amount of 2.4% by mass or less, and most preferably in an amount of 0.0% by mass. It is preferable if the content of the hydrophobic polymer having mobility is in this range because the blood compatibility can be maintained while keeping the strength of the separation membrane.

In the present invention, % by mass of each of the hydrophilic polymer having mobility and the hydrophobic polymer having mobility is calculated as follows.

After weighing 5 g of a separation membrane, it is placed in an Erlenmeyer flask. Then, 150 mL of a mixed

solvent of ethanol/tetrahydrofuran (50/50% by volume) is added thereto as an extraction solvent, and shaking extraction is performed for an extraction time of 24 hours at a temperature of 25°C and at a shaking frequency of 80 rpm. By this operation, the hydrophilic polymer having mobility and the hydrophobic polymer having mobility which are contained in the separation membrane are extracted in the solvent. Then, the extraction liquid is filtered through filter paper. Furthermore, the residue on the filter paper is washed with 75 mL of a new mixed solvent of ethanol/tetrahydrofuran (50/50% by volume) and filtered. The whole filtrate is placed in a concentration recovery flask, and the solvent is removed using a decompression concentrator and an immersion-type thermostatic bath under room temperature to thereby obtain extracts. The extracts obtained in this way are the hydrophilic polymer having mobility and the hydrophobic polymer having mobility (both together referred to as the polymer having mobility). After the solvent is removed, the recovery flask is vacuum dried for 12 hours or more, and then the mass of the polymers having mobility is measured. By dividing this measured value by the mass of the original separation membrane, the mass fraction of the polymers having mobility in the separation membrane is calculated.

The thus-obtained polymers having mobility are dissolved in deuterated chloroform or the like and subjected to $^1$H-NMR measurement. The mass fractions of the hydrophilic polymer having mobility and the hydrophobic polymer having mobility which are contained in the polymers having mobility are calculated from the area ratios of the signal derived from the hydrophilic polymer having mobility and the signal derived from the hydrophobic polymer having mobility, respectively.

The mass fraction of the polymers having mobility in the separation membrane is multiplied by the mass fraction of the hydrophilic polymer having mobility, contained in the polymers having mobility, which is then further multiplied by 100, whereby the content of the hydrophilic polymer having mobility to the separation membrane is determined in % by mass. Similarly, the mass fraction of the polymers having mobility in the separation membrane is multiplied by the mass fraction of the hydrophobic polymer having mobility, contained in the polymers having mobility, which is then further multiplied by 100, whereby the content of the hydrophobic polymer having mobility is determined in % by mass.

It is noted that the biocompatible copolymers can also contain a biocompatible copolymer having mobility. In the present invention, measurement is performed by the above-mentioned method in the same manner.

In the separation membrane module of the present invention, a water content per self-weight of the separation membrane is 10% by mass or less, preferably 4% by mass or less, and more preferably 2% by mass or less. The lower limit of the water content is not particularly limited, and the lower limit is substantially 0%. The self-weight of the separation membrane refers to the mass of the separation membrane when the separation membrane is dried to an absolutely dry state. If the water content of the separation membrane is extremely high, the weight of the separation membrane module may increase, resulting in an increased cost of transportation. Furthermore, depending on the storage temperature of the product, the separation membrane may freeze, resulting in reduced performance. On the other hand, the dry-type separation membrane module with a low water content of the separation membrane can reduce the weight of the separation membrane module and improve the cost and safety of transportation. The separation membrane module with a low water content of the separation membrane has an improved foam release property during priming before use.

Here, the "water content per self-weight" of the separation membrane in the present invention is determined as follows. That is, the mass of the separation membrane in the separation membrane module before drying (a) and the mass of the separation membrane after drying to the absolutely dried state (b) are measured respectively, and the water content is calculated using the equation "water content per self-weight of the separation membrane (% by mass) = 100 $\times$ (a - b)/b".

The separation membrane module of the present invention is a separation membrane module in which the separation membrane is built into a case and is capable of separating a substance to be recovered and a substance to be removed from the liquid to be treated. The form of the separation membrane can be a flat membrane, a hollow fiber membrane, or the like. Of these, the form of the separation membrane is preferably the hollow fiber membrane because of its ability to effectively remove substances. Similarly, the form of the separation membrane module is preferably a hollow fiber membrane module.

Fig. 1 is a schematic diagram showing an embodiment of the hollow fiber membrane module. The hollow fiber membrane module includes a cylindrical case 11 and hollow fiber membranes 13, and the hollow fiber membranes 13 are built in the case 11. Specifically, a bundle of the hollow fiber membranes 13 cut into a desired length is preferably housed in the cylindrical case 11. Both ends of the hollow fiber membranes are preferably immobilized to both ends of the cylindrical case 11 by a potting material 17, or the like. At this time, both ends of the hollow fiber membranes 13 are opened. The potting material refers to the resin to immobilize the hollow fiber membranes inside the hollow fiber membrane module, and an epoxy resin or urethane resin is mainly used therefor.

The hollow fiber membrane module preferably includes headers 14A and 14B at both ends of the cylindrical case 11. The header 14A preferably includes a hollow fiber membrane inner inlet 15A (an inlet for the liquid to be treated). The header 14B preferably includes a hollow fiber membrane inner outlet 15B (an outlet for the liquid to be treated). As illustrated in Fig. 1, the hollow fiber membrane module preferably includes a hollow fiber membrane outer nozzle (an inlet for the treatment liquid) 16A and a hollow fiber membrane outer nozzle (an outlet for a treatment liquid) 16B at the

side surfaces of the case and in the vicinity of both ends of the case.

The liquid to be treated is usually introduced through the hollow fiber membrane inner inlet (the inlet for the liquid to be treated) 15A, passed through the inside of the hollow fiber membrane, and then discharged through the hollow fiber membrane inner outlet (the outlet for the liquid to be treated) 15B. Meanwhile, the treatment liquid is usually introduced through the hollow fiber membrane outer nozzle 16A (the inlet for the treatment liquid), passed through the outside of the hollow fiber membrane, and then discharged through the hollow fiber membrane outer nozzle 16B (the outlet for the treatment liquid). In other words, a flow direction of the liquid to be treated and a flow direction of the treatment liquid are usually opposed to each other.

When the hollow fiber membrane module is used for medical applications, blood serving as a liquid to be treated is usually introduced through the hollow fiber membrane inner inlet (the inlet for the liquid to be treated) 15A and artificially dialyzed by passing through the inside of the hollow fiber membranes, and then blood after purification as an objective substance to be recovered is discharged through the hollow fiber membrane inner outlet (the outlet for the liquid to be treated) 15B. In other words, a passage from the hollow fiber membrane inner inlet (the inlet 15A for the liquid to be treated) to the hollow fiber membrane inner outlet (the outlet 15B for the liquid to be treated) through the inside of the hollow fiber membrane becomes a passage for the liquid to be treated. Hereinafter, this passage is sometimes referred to simply as a "blood side passage".

Meanwhile, a dialysis fluid used as a treatment liquid is introduced through the hollow fiber membrane outer nozzle (the inlet for the treatment liquid) 16A to thereby purify (dialyze) the liquid to be treated (the blood) by passing through the outside of the hollow fiber membrane, and then the dialysis fluid containing a toxic component (waste) in the blood is discharged through the hollow fiber membrane outer nozzle (the outlet for the treatment liquid) 16B. In other words, a passage from the hollow fiber membrane outer nozzle (the inlet for the treatment liquid) 16A to the hollow fiber membrane outer nozzle (the outlet for the treatment liquid) 16B through the outside of the hollow fiber membrane becomes a passage for the treatment liquid. Hereinafter, this passage is sometimes referred to simply as a "dialysis fluid passage".

In the case where the separation membrane is the hollow fiber membrane, if the amount of eluted substance from the hollow fiber membrane is large, the eluted substance may get mixed into the blood when the membrane is used for blood purification applications such as dialysis, causing adverse events and complications. Here, the eluted substance refers to a compound eluted from the separation membrane and having a weight-average molecular weight of 10,000 or more. The amount of eluted substance is preferably 1.0 $mg/m^2$ or less, more preferably 0.8 $mg/m^2$ or less, still more preferably 0.7 $mg/m^2$ or less, and most preferably 0.0 $mg/m^2$.

In the present invention, the amount of eluted substance is expressed as a value per unit area of the hollow fiber membrane, obtained by measuring as follows. In other words, after washing the hollow fiber membrane by passing ultrapure water through the hollow fiber membrane module, new ultrapure water heated to 37°C is caused to pass through the passage inner surface side of the hollow fiber membrane while circulating for 4 hours, and subsequently circulated for 4 hours. The detailed conditions will be described later. Here, the ultrapure water refers to water with a resistivity of 10 $M\Omega \cdot cm$ or more. The water that has been circulated for 4 hours is frozen and dried to be concentrated 100 times as a measurement sample, and the amount of polymers present in the sample is measured using gel filtration chromatography or the like. The amount of eluted substance ($mg/m^2$) is calculated by the following equation. A value obtained by rounding off to one decimal place of the calculated value is used as the amount of eluted substance.

Amount of eluted substance ($mg/m^2$) = amount (mg) of polymers in measurement sample/total value of inner surface areas of hollow fiber membranes ($m^2$)

Total value of inner surface areas of hollow fiber membranes ($m^2$) = $\pi \times$ inner diameter of hollow fiber membrane (m) $\times$ effective length (m) $\times$ number of the hollow fiber membranes (fibers) where the effective length refers to the length of a portion of the hollow fiber membrane filled in the hollow fiber membrane module and to which a potting material is not attached.

The method for manufacturing a separation membrane module of the present invention will be described below by using the hollow fiber membrane module as an example.

There are various methods for manufacturing the hollow fiber membrane module depending on its application, but one of them can be divided into a process of manufacturing the hollow fiber membrane and a process of incorporating the hollow fiber membranes into the module. In the manufacture of the hollow fiber membrane module, an irradiation treatment with radiation may be performed before the process of incorporating the hollow fiber membranes into the module or may be performed after the process of incorporating the hollow fiber membranes into the module. In particular, in the case where the hollow fiber membrane module is for medical use, it is preferable to perform an irradiation treatment with $\gamma$-rays as the irradiation treatment with radiation, after the process of incorporation into the module, because sterilization can be performed at the same time.

First, the hollow fiber membrane to be built into the hollow fiber membrane module is manufactured. For example, the following method is a method for manufacturing the hollow fiber membrane. Specifically, a stock solution in which a polysulfone-based polymer (a hydrophobic polymer) and polyvinylpyrrolidone (a hydrophilic polymer) are dissolved in a mixed solvent of a good solvent and a poor solvent for the polysulfone-based polymer is discharged from a pipe outside a double tube type spinneret, allowed to pass through a dry section, and then guided to a coagulation bath. In this case, an injection liquid is discharged through an inner tube of the double tube type spinneret.

It is preferred that the relative humidity in the dry section is 60 to 90% in this case. By setting the humidity in the dry section within this range, the phase separation behavior near the outer surface is accelerated due to the supply of water from the outer surface of the membrane while the solution passes through the dry section, so that the pore diameter of the resulting hollow fiber membrane is expanded. As a result, it is possible to reduce the permeation and diffusion resistance during dialysis.

The good solvent means a solvent which dissolves a polysulfone-based polymer in the membrane forming stock solution, and is preferably a solvent that dissolves 10% by mass or more of the polysulfone-based polymer. As the good solvent, N,N-dimethylacetamide, dimethyl sulfoxide, N,N-dimethylformamide, N-methylpyrrolidone, dioxane, and the like are preferable, although there is no particular limitation. From the viewpoint of the solubility of polysulfone-based polymers, N,N-dimethylacetamide or N-methylpyrrolidone is suitably used. Meanwhile, the poor solvent means a solvent which does not dissolve a polysulfone-based polymer in the membrane forming stock solution, and is preferably a solvent that does not dissolve 0.1% by mass or more of the polysulfone-based polymer. The poor solvent is not particularly limited, but is preferably water, ethanol, methanol, glycerin, or the like. In particular, water is suitably used.

The mass ratio of the good solvent to the poor solvent in the mixed solvent is preferably 100:1 to 50:1, and more preferably 85:1 to 60:1.

The mass ratio of the polysulfone-based polymer to polyvinylpyrrolidone in the stock solution is preferably 20:1 to 1:5, and more preferably 5:1 to 1:1. The concentration of the polysulfone-based polymer and polyvinylpyrrolidone in the stock solution is preferably 10 to 30% by mass, and more preferably 15 to 25% by mass.

The injection liquid preferably contains the same solvent as that used in the stock solution from the viewpoint of the process suitability. As for the composition of the injection liquid, for example, when N,N-dimethylacetamide is used as the good solvent, an aqueous solution thereof with a concentration of 45 to 80% by mass is suitably used, and an aqueous solution thereof with a concentration of 60 to 75% by mass is more suitably used.

A method for obtaining the module by building the hollow fiber membranes into the case is not particularly limited, but is, for example, the following method. First, the hollow fiber membrane is cut into the desired length, and the desired number of the cut pieces are bundled and then placed in a cylindrical case. Thereafter, both ends are temporarily capped, and a potting material is filled in both ends of the hollow fiber membrane. In this process, a method for filling the potting material while rotating the module by means of a centrifugal machine is preferred, because the potting material can be uniformly charged. After the potting material is solidified, both ends of the hollow fiber membranes are cut in such a manner that openings can be formed at both ends of the hollow fiber membranes, thereby obtaining the hollow fiber membrane module.

The thickness of the hollow fiber membrane is preferably 20 μm or more, and more preferably 25 μm or more. Since a membrane mass transfer coefficient can be reduced as the thickness of the hollow fiber membrane decreases, substance removing performance of the hollow fiber membrane is improved. Meanwhile, the thickness of the hollow fiber membrane is 50 μm or less, and more preferably 45 μm or less. It is preferable if the thickness of the hollow fiber membrane is in this range, because fiber breakage and drying collapse can be prevented from occurring. The thickness of the hollow fiber membrane refers to an average value determined by measuring the thicknesses of 16 hollow fiber membranes randomly selected using, for example, a lens (VH-Z100; KEYENCE Corporation) at a magnification of 1,000 times of a microscope.

The inner diameter of the hollow fiber membrane is preferably 80 μm or more, more preferably 100 μm or more, and still more preferably 120 μm or more. Meanwhile, the inner diameter of the hollow fiber membrane is preferably 250 μm or less, more preferably 200 μm or less, and still more preferably 160 μm or less. It is preferable if the inner diameter of the hollow fiber membrane is in this range because it prevents fiber collapse of the hollow fiber membrane.

The inner diameter of the hollow fiber membrane refers to a value obtained by determining the outer diameters and thicknesses of 16 hollow fiber membranes randomly selected and then calculating using the following equation. The outer diameter of the hollow fiber membrane means an average value determined by measuring the outer diameters of 16 hollow fiber membranes randomly selected using a laser displacement meter (for example, LS5040T; KEYENCE Corporation).

$$\text{Inner diameter } (\mu m) \text{ of hollow fiber membrane} = \text{outer diameter of hollow fiber membrane} - 2 \times \text{membrane thickness}$$

The filling rate of the hollow fiber membranes is preferably 50% or more, and more preferably 55% or more because the bias of the fiber bundle of the hollow fiber membranes is reduced when the hollow fiber membranes are bonded to the case ends with the potting material. Meanwhile, the filling rate of the hollow fiber membranes is preferably 70% or less, and more preferably 65% or less because the hollow fiber membrane does not deform locally, allowing blood to flow easily throughout the entire hollow fiber membrane module. Here, the filling rate of the hollow fiber membranes is the ratio of the total of the cross-sectional areas of the hollow fiber membrane portions calculated from the outer diameter of the hollow fiber membrane relative to the cross-sectional area calculated from the average inner diameter of a cylindrical portion of the case of the hollow fiber membrane module.

The hollow fiber membrane preferably has a crimping structure. By imparting the crimping structure to the hollow fiber membrane, the dissociation rate of attached biological components is increased, so that fouling of the hollow fiber membrane can be suppressed.

Here, the crimping structure is a wave-like or similarly shaped structure imparted to the hollow fiber membrane, and a state in which the hollow fiber membrane retains its wave-like form when the hollow fiber membrane hangs vertically and naturally is called the crimping structure. The characteristics of the crimping structure are evaluated by the wavelength and wave height of the crimp.

The wavelength of the crimp is the length of the repeating unit in the crimping structure in the length direction of the hollow fiber membrane. The wavelength of the crimp is preferably 10 mm or less. This wavelength range is preferable because the contact between the hollow fiber membranes can be suppressed and the filtering performance of the hollow fiber membrane module can be maintained. In contrast, the wavelength of the crimp is preferably 5 mm or more. This wavelength range is preferable because the hollow fiber membrane is prevented from being subjected to a physical load during a crimping process in the membrane formation, thereby suppressing fiber collapse.

The wave height of the crimp is the size at which the hollow fiber membrane in the crimp structure swings perpendicular to the longitudinal direction. The wave height of the crimp is preferably 0.5 mm or less, and more preferably 0.3 mm or less. This range of the wave height is preferable because the diameter of the hollow fiber membrane bundle does not become large, and the insertability of the hollow fiber bundle into the module case is good. Meanwhile, the wave height of the crimp is preferably 0.1 mm or more. This range of the wave height is preferable because it enables stable crimping.

The surface area of the insides of the hollow fiber membranes is preferably 0.3 $m^2$ or more and more preferably 0.5 $m^2$ or more. In this range, the water removal performance of the hollow fiber membrane is high. The water removal performance means the ability of the hollow fiber membrane to remove water from a liquid flowing inside the hollow fiber membrane, especially blood. The larger the surface area of the insides of the hollow fiber membranes is, the larger the contact area with the above-mentioned liquid becomes, and the more the water removal performance is improved.

Meanwhile, the surface area of the insides of the hollow fiber membranes is preferably 4.0 $m^2$ or less, and further preferably 2.6 $m^2$. In this range, the hollow fiber membrane module does not become extremely large, and is easy to handle.

The surface area of the insides of the hollow fiber membranes is determined by the following equation.

$$\text{Surface area of the inner surface side of hollow fiber membranes } (m^2) = \pi \times \text{inner diameter of hollow fiber membrane } (m) \times \text{effective length } (m) \times \text{number of hollow fiber membranes (fibers)}$$

where the effective length (m) means the length of a portion of the hollow fiber membrane filled in the hollow fiber membrane module and to which a potting material is not attached, and $\pi$ means number pi.

The biocompatible copolymer is introduced into the separation membrane containing hydrophobic and hydrophilic polymers, which has been obtained as mentioned above. The biocompatible copolymer may be introduced only on the surface of the separation membrane or may be introduced into the entire separation membrane including the surface. When the biocompatible copolymer is introduced only on the surface of the separation membrane, it is preferable to introduce it on a surface of the separation membrane on the side where a biological component comes into contact.

As a method for introducing the biocompatible copolymer to the surface of the separation membrane, for example, a method for coating with the biocompatible copolymer after formation of the separation membrane is preferably used. As the coating method, a method for contacting the surface of the separation membrane with the biocompatible copolymer as a solution (preferably an aqueous solution) is exemplified. More specifically, there are a method in which a solution of the biocompatible copolymer is caused to flow at a predetermined flow rate such that it contacts the surface

of the separation membrane, and a method in which a separation membrane is immersed in the above-mentioned solution. Furthermore, a method for filtering a solution containing the biocompatible copolymer through the separation membrane is suitably used. This can increase the amount of the biocompatible copolymer introduced into the surface of the separation membrane. In addition, as the biocompatible copolymer is pressed against the surface of the separation membrane, actions such as entanglement of the polymer chains of the biocompatible copolymer occur, thereby enabling the reduction of elution of the biocompatible copolymer. In particular, when the separation membrane is a hollow fiber membrane, a method is suitably used in which a solution containing a biocompatible copolymer is brought into contact with the hollow fiber membrane while filtering it from the inside to the outside or from the outside to the inside of the hollow fiber membrane. Since the liquid to be treated, such as blood, is usually passed through the inside of the hollow fiber membrane, the method for contacting the solution with the hollow fiber membrane while filtering from the inside to the outside of the hollow fiber membrane is more preferable from the viewpoint of increasing the amount of the biocompatible copolymer introduced into the inner surface of the hollow fiber membrane. In this case, 1% or more, preferably 10% or more, and more preferably 50% or more of the flowing amount of the solution containing the biocompatible copolymer introduced into the separation membrane module is allowed to be filtered through the separation membrane. The upper limit thereof is 100%, i.e., total filtration.

As another method, there is also proposed a method for forming a membrane by adding a biocompatible copolymer to a stock solution for forming a separation membrane, wherein the conditions are set such that the biocompatible copolymer is introduced into the entire separation membrane with its content near the surface of the membrane becoming high.

When a solution dissolving the biocompatible copolymer is passed through the separation membrane in the module and introduced into the surface of the separation membrane, the concentration of the biocompatible copolymer in the solution is preferably 0.001% by mass or more, more preferably 0.01% by mass or more, and still more preferably 0.03% by mass or more. The concentration in this range is preferable because a sufficient amount of polymer is introduced into the surface. On the other hand, the concentration of the biocompatible copolymer in the aforementioned solution is preferably 10% by mass or less, and more preferably 1% by mass or less. The concentration in this range is preferable because it is unlikely to cause an increase in the amount of eluted substance from the module.

Water is preferred as the solvent in the above-mentioned solution. If the biocompatible copolymer does not dissolve in water at a given concentration, an organic solvent that does not dissolve the separation membrane may be used. Alternatively, a mixed solvent of water and an organic solvent, which is compatible with water and does not dissolve the separation membrane, may be used. Examples of the organic solvent include, but are not limited to, alcohol-based solvents, such as methanol, ethanol, and propanol.

When a mixed solvent of the organic solvent and water is used, the mass fraction of the organic solvent in the mixed solvent is preferably 60% or less, more preferably 10% or less, and still more preferably 1% or less. If the mass fraction of the organic solvent in the mixed solvent is within this range, it is preferable because it can prevent the entire separation membrane from swelling and deforming and reducing its strength.

The temperature of the solution of the biocompatible copolymer when in contact with the separation membrane is preferably 10 to 80°C, and from the viewpoint of safety during manufacture, more preferably 15 to 65°C, and still more preferably 20 to 50°C.

If the hydrophobic polymer contains an aromatic group and the biocompatible copolymer contains an ester group, the amount of the biocompatible copolymer which has been introduced can be measured by a total reflection infrared spectroscopy (ATR). In the measurement method of ATR, infrared absorption spectra are measured at 25 points in one position with a measurement range of 3 $\mu$m $\times$ 3 $\mu$m at a cumulative number of 30 or more. From the individual infrared absorption spectrum, $(A_{COO}) / (A_{CC})$ is determined by the following method, and then an average value thereof at 25 points is determined. Specifically, a base line is drawn on the resulting infrared absorption spectrum at 1,711 to 1,759 $cm^{-1}$, and an area surrounded by the base line and a positive part of the spectrum is defined as a peak area $(A_{COO})$ derived from an ester group. In the same manner, a base line is drawn on the resulting infrared absorption spectrum at 1,549 to 1,620 $cm^{-1}$, and an area surrounded by the base line and the positive part of the spectrum is defined as a peak area $(A_{CC})$ derived from C=C of an aromatic group. The ratio of both values, namely, $(A_{COO}) / (A_{CC})$, is calculated, and an average value thereof at 25 points is determined. The measurement of $(A_{COO}) / (A_{CC})$ is performed at three different places, in the vicinity of both ends and around the center, in the longitudinal direction per one hollow fiber membrane, which measurement is performed on three hollow fiber membranes per one module, thereby determining $(A_{COO}) / (A_{CC})$ at 9 points in total. The average value thereof at 9 points is regarded as the value of $(A_{COO}) / (A_{CC})$ . This value of $(A_{COO}) / (A_{CC})$ is preferably 0.02 or more, more preferably 0.03 or more, and still more preferably 0.05 or more. On the other hand, in order to facilitate the maintenance of high filtration performance of the hollow fiber membrane, the value of $(A_{COO}) / (A_{CC})$ is preferably 0.5 or less, more preferably 0.3 or less, and still more preferably 0.15 or less. When the hydrophobic polymer contains an aromatic group and an ester group, the ATR measurement of the hydrophobic polymer alone is performed in advance in the same manner as mentioned above. A base line is drawn at 1,711 to 1,759 $cm^{-1}$, and an area surrounded by the base line and a positive part of the spectrum is defined as a peak area $(A_{COO}')$

derived from an ester group. In the same manner, a base line is drawn on the resulting infrared absorption spectrum at 1,549 to 1,620 $cm^{-1}$, an area surrounded by the base line and the positive part of the spectrum is defined as a peak area ($A_{CC}$') derived from C=C of an aromatic group, and then the ratio ($A_{COO}$' ) / ($A_{CC}$' ) between both areas is calculated. Also, for the hollow fiber membrane, ($A_{COO}$) / ($A_{CC}$) is calculated in the same manner, and ($A_{COO}$) / ($A_{CC}$)-($A_{COO}$') / ($A_{CC}$') is used as a guide for the amount of the introduced biocompatible copolymer.

When the biocompatible copolymer contains a vinyl carboxylate unit, it can be confirmed that the biocompatible copolymer has been introduced into the hollow fiber membrane by analyzing the surface of the hollow fiber membrane using X-ray photoelectron spectroscopy (XPS) and detecting a carbon peak derived from an ester group, or by analyzing the surface of the hollow fiber membrane using time-of-flight secondary ion mass spectrometry (TOF-SIMS) and detecting a carboxylic acid ion signal.

As a method for reducing the water content per self-weight of the separation membrane to 10% by mass or less in the separation membrane module, there are methods, such as a method in which a separation membrane dried to have a water content of 10% by mass or less before modularization is incorporated into a case, followed by modularization, and a method in which a separation membrane is dried after modularization of the separation membrane. There is no particular limitation, but there occurs a problem that it will take a long time to dry the separation membrane so as to have a water content of 10% by mass or less when dried after modularization, or a concern that the separation membranes may stick to each other when drying the separation membranes as a stack or bundle. Thus, it is preferable to dry the separation membrane before modularization such that it has a water content of 10% by mass or less.

As a method for performing a drying process on the separation membrane, there is a method in which it is dried by hot air or by microwave irradiation. Although there is no particular limitation, drying with hot air is preferably used because of its convenience.

For drying with hot air, a drying temperature is preferably 50°C or higher, and more preferably 70°C or higher. Such a temperature is preferable because it can suppress the decomposition and degradation of hydrophilic polymers and the adhesion of separation membranes to each other. Meanwhile, the drying temperature is preferably 150°C or lower, more preferably 130°C or lower, and still more preferably 120°C or lower. Such a temperature is preferable because it can shorten the time required for the drying process.

For drying by microwave irradiation, the separation membrane is preferably dried at a temperature of 100°C or lower, and more preferably dried at a temperature of 80°C or lower. If the temperature of the separation membrane is in this range, it is preferable because it can suppress the decomposition and degradation of the hydrophilic polymer and the reduction in the performance of the separation membrane. The method for controlling the temperature of the separation membrane is not particularly limited, but includes microwave irradiation under reduced pressure and the like.

In the case where the separation membrane module is the hollow fiber membrane module, it is preferable that the hollow fiber membrane module is obtained by building, into the case, the hollow fiber membranes manufactured by the above-mentioned method.

A method for building the hollow fiber membrane into the module is not particularly limited, but is, for example, the following method. First, the hollow fiber membrane is cut into the desired length, and the desired number of the cut pieces are bundled and then placed in a cylindrical case. Thereafter, both ends are temporarily capped, and a potting material is filled in both ends of the hollow fiber membrane. In this process, a method for filling the potting material while rotating the module by means of a centrifugal machine is preferred, because the potting material can be uniformly charged. After the potting material is solidified, both ends of the hollow fiber membranes are cut in such a manner that openings can be formed at both ends of the hollow fiber membranes. The hollow fiber membrane module is obtained by attaching headers to both ends of the case and plugging nozzle portions of the headers and case.

Separation membrane modules for blood purification such as artificial kidneys need to be sterilized, and radiation sterilization is frequently used because of its low residual toxicity and convenience.

In the present invention, the separation membrane module is preferably irradiated with radiation while the water content per self-weight of the separation membrane built into the module is set preferably in the range of 0.1 to 10% by mass and more preferably 0.2 to 4% by mass, from the viewpoint of controlling the amount of hydrophilic polymer having mobility mentioned above to be in the range of 1.0 to 1.7% by mass. This is because, if the water content per self-weight of the separation membrane is extremely high, the cross-linking of the hydrophilic polymer becomes extremely strong, resulting in a decrease in the amount of hydrophilic polymer having mobility. On the other hand, if the water content per self-weight of the separation membrane is extremely small, the amount of eluted substance from the separation membrane may increase. As the radiation used, $\alpha$-rays, $\beta$-rays, $\gamma$-rays, X-rays, ultraviolet rays, electron beams and the like are used. Of these, $\gamma$-rays and electron beams are suitably used in terms of their low residual toxicity and convenience. An irradiation dose is preferably 15 kGy or more, and preferably 100 kGy or less. The irradiation dose in this range is preferable because it prevents the cross-linking of the hydrophilic polymer from becoming excessively strong while maintaining the sterilization effect.

The irradiation with radiation is preferably performed under conditions where an oxygen concentration in the atmosphere around the separation membrane is 1% or less, more preferably 0.5% or less, even 0.2% or less, and

particularly preferably 0.1% or less. The oxygen concentration in this range is preferable because it prevents oxygen radicals from being easily generated by irradiation with radiation when irradiating with radiation, thereby suppressing degradation of the membrane and increase in eluted substance. A measuring method of the oxygen concentration will be mentioned later in Examples.

Examples of the method for reducing the oxygen concentration inside the separation membrane module include a method in which an inert gas is allowed to flow into a separation membrane module, and a method using an oxygen scavenger. In the method using an oxygen scavenger, the oxygen scavenger requires high cost, and there is a need to use, as a packaging case of the separation membrane, a packaging case with low oxygen permeability. Therefore, the method for filling with an inert gas is suitable. It is possible to achieve a low oxygen concentration state in the atmosphere around the separation membrane using an inert gas, by allowing the inert gas to flow in and then hermetically sealing all inlets of the separation membrane module, or by putting the hollow fiber membrane module in a packaging case, into which the inert gas has flowed to have low oxygen permeability, followed by sealing.

When the separation membrane module is the hollow fiber membrane module, the low fouling property of the hollow fiber membrane module can be quantitatively evaluated by a retention ratio of an albumin sieving coefficient, which is defined as an albumin sieve coefficient after 120 minutes of circulation relative to an albumin sieve coefficient after 10 minutes of circulation when bovine blood is circulated at 37°C through the passage inner surface side of the hollow fiber membrane. The detailed conditions will be described later. The retention ratio of the albumin sieve coefficient is preferably 76% or more. In this range, fouling of proteins and the like on the membrane is less likely to occur, and a pressure increase during use can be suppressed. The retention ratio of the albumin sieve coefficient is more preferably 80% or more, and still more preferably 85% or more. The upper limit of the retention ratio of the albumin sieve coefficient means the point where no fouling of the membrane occurs and no change in the albumin sieve coefficient is observed, i.e., 100%.

[Examples]

(1) Weight-Average Molecular Weight of Copolymer

A 0.1N $LiNO_3$ solution with water/methanol = 50/50 (% by volume) was prepared and used as a GPC development solution. In 2 mL of this solution, 2 mg of a copolymer was dissolved. 100 μL of this copolymer solution was injected into a GPC apparatus with a column (Tosoh Corporation, GMPWXL) connected thereto. The flow rate was set to 0.5 mL/min, and the measurement time was 30 minutes. The detection was performed by a differential refractive index detector RID-10A (manufactured by SHIMADZU CORPORATION), and the weight-average molecular weight was calculated from the copolymer-derived peak appearing at an elution time of about 15 minutes. The weight-average molecular weight was calculated by rounding off to the nearest hundred. Polyethylene oxide standard samples (0.1 kD to 1,258 kD) manufactured by Agilent Technologies were used to prepare calibration curves.

(2) Mole Fraction of Vinyl Carboxylate Unit in Copolymer

The copolymer was dissolved in chloroform-D, 99.7% (containing 0.05V/V% TMS from Wako Pure Chemical Industries, Ltd.) to prepare a solution with a concentration of 1 mg/mL. The solution was placed in an NMR sample tube, and $^1$H-NMR measurement (with a superconducting FTNMR EX-270: manufactured by JEOL LTD.) was performed thereon. The temperature was set at room temperature, and the cumulative number was 32 times.

From the results of this measurement, a value of $A_{VC}/(A_{PVP} + A_{VC}) \times 100$ was calculated from $3A_{PVP}$ and $A_{VC}$, where $3A_{PVP}$ is the area of a region surrounded by the base line and a peak found between 2.7 and 4.3 ppm with the peak being derived from a proton (3H) bonded to a carbon atom adjacent to a nitrogen atom of vinylpyrrolidone, and Avc is the area of a region surrounded by the base line and a peak found between 4.3 and 5.2 ppm with the peak being derived from a proton (1H) bonded to carbon at the an α-position of a carboxylic acid vinyl ester. Thus, the calculated value of $A_{VC}/ (A_{PVP} + A_{VC}) \times 100$ was defined as a mole fraction (%) of a vinyl carboxylate unit in the copolymer. This method is an example of measuring the mole fraction of a copolymer of vinylpyrrolidone and vinyl carboxylate. In the case of a copolymer composed of a combination of other monomers, the mole fraction is determined by selecting an appropriate proton-derived peak as needed. The mole fraction was calculated by rounding off to the nearest ten.

(3) Measurement of Amount of Hydrophilic Polymer Having Mobility and Amount of Hydrophobic Polymer Having Mobility

After weighing about 5 g of a separation membrane obtained in each of Examples and Comparative Examples, it was placed in an Erlenmeyer flask. As an extraction solvent, 150 mL of a mixed solvent of ethanol/tetrahydrofuran (50/50% by volume) was added therein and covered with aluminum foil, which was further clamped with a paraffin film thereon. Shaking extraction was performed for an extraction time of 24 hours at a temperature of 25°C and at a shaking

frequency of 80 rpm. Then, an extraction liquid was filtered through filter paper. Furthermore, the residue on the filter paper was washed with 75 mL of a new mixed solvent of ethanol/tetrahydrofuran (50/50% by volume) and filtered. The whole filtrate was placed in a concentration recovery flask, and the solvent was removed using a decompression concentrator and an immersion-type thermostatic bath under room temperature to thereby obtain extracts (polymers having mobility). After the removal of the solvent, the recovery flask was vacuum dried for 12 hours or more, and then the mass of the polymers having mobility was measured. By dividing this measured value by the mass of the original separation membrane, the mass fraction of the polymers having mobility in the separation membrane was calculated.

The thus-obtained polymers having mobility were dissolved in deuterated chloroform or the like and subjected to $^1$H-NMR measurement. The mass fractions of the hydrophilic polymer having mobility and the hydrophobic polymer having mobility, contained in the polymers having mobility, were calculated from the area ratios of the signal derived from the hydrophilic polymer having mobility and the signal derived from the hydrophobic polymer having mobility.

The mass fraction of the polymers having mobility in the separation membrane was multiplied by the mass fraction of the hydrophilic polymer having mobility, contained in the polymers having mobility, which was then multiplied by 100, whereby the content of the hydrophilic polymer having mobility in the separation membrane was determined (in % by mass). Furthermore, the mass fraction of the polymers having mobility in the separation membrane was multiplied by the mass fraction of the hydrophobic polymer having mobility, contained in the polymers having mobility, which was then further multiplied by 100, whereby the content of the hydrophobic polymer having mobility in the separation membrane was determined (in % by mass).

(4) Measurement of Water Content of Hollow Fiber Membrane

The hollow fiber membrane module obtained from each of Examples and Comparative Examples was placed in a decompression dryer set at 50°C and dried at 0.5 Torr for 12 hours, followed by measuring the mass of the hollow fiber membrane module, and the measured mass was defined as a hollow fiber membrane module mass after absolute drying (b). Aside from this, the hollow fiber membrane modules obtained from Examples and Comparative Examples were subjected to a washing process. Pure water at 25°C was passed from the hollow fiber membrane inner inlet 15A to the outlet 15B of the hollow fiber membrane module at a flow rate of 500 mL/min for 1 minute, and then passed from the hollow fiber membrane inner inlet 15A to the hollow fiber membrane outer nozzle 16A in the direction of membrane thickness at a flow rate of 500 mL/min for 1 minute. Next, a liquid filled from the hollow fiber membrane outer nozzle 16A into the inner inlet 15A was pushed out using compressed air at a pressure of 100 kPa. Then, the filling liquid inside the hollow fiber membrane was then blown and extruded in the direction of 15A from 15B, bringing only the hollow fiber membrane into a wetted state. Then, the hollow fiber membrane module was dried using compressed air or microwaves. The mass of the hollow fiber membrane module in this state was measured and defined as a hollow fiber membrane module mass before absolute drying (a). Another module made in the same manner was disassembled to take out the hollow fiber membrane, and only the hollow fiber membrane was dried under reduced pressure at 50°C and 0.5 Torr for 12 hours, so that then the measured mass was defined as a hollow fiber membrane mass during absolute drying (c). The water content per tare weight of the hollow fiber membrane was calculated using the following equation, and a value obtained by rounding off to one decimal place of the calculated value was used as the measurement value.

$$\text{Water content per tare weight of the hollow fiber membrane (\% by mass)} = 100 \times (a - b)/c$$

where a: hollow fiber membrane module mass (g) before absolute drying, b: hollow fiber membrane module mass (g) after absolute drying, and c: hollow fiber membrane mass (g) during absolute drying.

(5) Measurement of Oxygen Concentration in Hollow Fiber Membrane Module

Nitrogen or gas adjusted to have a predetermined oxygen concentration was flowed into the hollow fiber membrane module, obtained in each of Examples and Comparative Examples, simultaneously from the inside and outside of the hollow fiber membrane to thereby sufficiently substitute the gas inside the hollow fiber membrane module therewith, and then the hollow fiber membrane module was sealed with a rubber cap made of a material having low oxygen permeability. Then, the oxygen concentration in the hollow fiber membrane module was measured using IS-300 manufactured by IIJIMA DENSHI KOGIYO K.K. When a rubber cap was not used, a packaging bag having low oxygen permeability was used to substitute the inside of the packaging bag with nitrogen or gas adjusted to have a predetermined oxygen concentration. Thereafter, the hollow fiber membrane module, the inside of which was substituted with the gas as mentioned above, was placed in the packaging bag and was then sealed. After that, the oxygen concentration in the

packaging bag was measured in the same manner. The value was rounded off the third decimal place.

(6) Measurement of Amount of Eluted Substance from Hollow Fiber Membrane

The hollow fiber membrane modules obtained from Examples and Comparative Examples were subjected to the washing process. The hollow fiber membrane module was washed by allowing ultrapure water to pass through the passage inner surface side of the hollow fiber membrane at a flow rate of 100 ml/min for 5 minutes, then allowing the ultrapure water to pass from the inner surface of the hollow fiber membrane outward at a flow rate of 100 ml/min for 5 min in the same manner, and further allowing the ultrapure water to pass through the passage inside the hollow fiber membrane at a flow rate of 100 ml/min for 5 minutes. Then, 4 L of the ultrapure water heated to 37°C was passed through the passage inner surface side of the hollow fiber membrane while circulating at a flow rate of 200 ml/min for 4 hours. The water after the circulation for 4 hours was taken to obtain a sample solution.

Since the obtained sample solution was dilute, it was frozen and dried to be concentrated 100 times, followed by being subjected to the measurement in gel filtration chromatography. The measurement in the gel filtration chromatography was performed under the following conditions. First, the measurement by the gel filtration chromatography was performed using, as standard samples, several types of aqueous solutions prepared by dissolving polyvinylpyrrolidone (K90, manufactured by ISP) while changing its concentration from 10 to 1,000 ppm. A calibration curve having a relationship between a peak area of polyvinylpyrrolidone as the standard sample and its concentration prepared was made. Then, the concentration of an eluted substance in the sample solution was calculated from the calibration curve and the peak area derived from the eluted substance and determined by measuring the sample solution.

Column: TSKgel GMPWXL (manufactured by Tosoh Corporation, inner diameter 7.8 mm × 30cm, particle size 7 μm)
Solvent: 0.1 mol/L lithium nitrate, water/methanol: 50/50% by volume
Flow rate: 0.5 ml/min
Column temperature: 40°C
Detector: Differential refractometer RI-8010 (manufactured by Tosoh Corporation).

The amount of eluted polymer contained in 4 L of ultrapure water after circulation for 4 hours was calculated using the concentration of eluted substance in the obtained sample solution by the following equation. A value which was obtained by rounding off to one decimal place was used as the calculated value.

Amount of polymer in measurement sample (mg) = concentration (ppm) of eluted substance in sample solution × 4 (kg)/100

Amount of eluted substance ($mg/m^2$) of hollow fiber membrane module = amount of polymer (mg) eluted in 4 L of water/total value of inner surface areas of hollow fiber membranes ($m^2$)

(7) Measurement of Amount of Biocompatible Copolymer Introduced into Hollow Fiber Membrane by using ATR Method

A hollow fiber membrane obtained in each of Examples and Comparative Examples was sliced into a semi-cylindrical shape with a single-edged knife, rinsed with ultrapure water, and then dried at room temperature under 0.5 Torr for 10 hours to obtain a sample for the measurement of a surface. The surface of the dried hollow fiber membrane was measured by the ATR method using IRT-3000 manufactured by JASCO Corporation. The measurement was performed on 25 points in total of 5 points (lengthwise) by 5 points (widthwise) in one position within a measurement range of 3 μm × 3 μm per position with a cumulative number of 30 in a field region (aperture) to 100 μm × 100 μm. A base line was drawn on the resulting spectrum in the wavelength range of 1,549 to 1,620 $cm^{-1}$, and an area surrounded by the base line and the positive part of the spectrum was defined as the peak area ($A_{CC}$) derived from the benzene ring C=C of polysulfone. In the same manner, a base line was drawn on the spectrum in the range of 1,711 to 1,759 $cm^{-1}$, and an area surrounded by the base line and the positive part of the spectrum was defined as the peak area ($A_{COO}$)

derived from an ester group. A value of $(A_{COO}) / (A_{CC})$ was determined, and then an average thereof at 25 points was determined.

The measurement of $(A_{COO}) / (A_{CC})$ was performed at three different places, in the vicinity of both end surfaces and around the center, in the longitudinal direction of the same hollow fiber membrane, which measurement was carried on three hollow fiber membranes per one module, thereby determining $(A_{COO}) / (A_{CC})$ at 9 points in total. The average value thereof at 9 points was used as the average value of $(A_{COO}) / (A_{CC})$ , rounded to the third decimal place.

(8) Measurement of Changes in Albumin Sieving Coefficient Over Time

In the measurement of this item, TR2000S manufactured by Toray Medical Co., Ltd., was used as a dialyzer 22. In Fig. 2, TR2000S includes elements corresponding to a Bi pump 24, an F pump 25, and the dialyzer 22. Each circuit was provided with chambers (Do circuit chamber 34, Di circuit chamber 35, Bi circuit chamber 36, and Bo circuit chamber 37) for removal of bubbles in a liquid. A liquid level of the Bi circuit chamber 36, a liquid level of the Di circuit chamber 35, an upper portion of the Bo circuit chamber 37, and an upper portion of the Do circuit chamber 34 were adjusted to the same height as a base line 21 so as not to cause a pressure difference.

Bovine blood containing 3.9g/L of sodium citrate and 2000 U/L of heparin added thereto was so prepared as to have a hematocrit value of 30%, a total protein concentration of 6.5 g/dL, and a temperature of 37°C, and charged in a circulation beaker 27. The circulation beaker 27 was set in a warm water tank 33 as shown in Fig. 2.

The hollow fiber membrane module obtained from each of Examples and Comparative Examples was connected to the above-mentioned dialyzer. The inlet 15A for the liquid to be treated of a hollow fiber membrane module 23 and the circulation beaker 27 were connected through a Bi circuit 28 via the Bi pump 24. The outlet 15B for the liquid to be treated of the hollow fiber membrane module 23 and the circulation beaker 27 were connected through a Bo circuit 29. An outlet for the dialysis fluid of the dialyzer 22 and the inlet 16A for the treatment liquid of the hollow fiber membrane module 23 were connected through a Di circuit 30. An inlet for the dialysis fluid of a dialyzer 32 and the outlet 16B for the treatment liquid of the hollow fiber membrane module 23 were connected through a Do circuit 31.

Dialysis fluid (Kindaly solution AF No. 2, manufactured by Fuso Pharmaceutical Industries, Ltd.) A and B were set in the dialyzer 22. The concentration of the dialysis fluid was set in a range 13 to 15 mS/cm, the temperature was set at 34°C or higher, and the dialysis fluid flow rate was set at 500 mL/min.

An inlet portion of the Bi circuit 28 was placed in a beaker filled with a saline solution, the Bi pump 24 was set to have a flow rate of 200 mL/min, and the pump was started to wash the hollow fiber membrane module for 5 minutes.

Then, the inlet portion of the Bi circuit 28 was placed in the circulation beaker 27 filled with 2 L of the bovine blood prepared (37°C), the Bi pump 24 was set to have a flow rate of 200 mL/min, and the pump was started. After the liquid discharged from the outlet of the Bo circuit 29 was discarded in a waste case 26 for 90 seconds, the outlet portion of the Bo circuit 29 and the outlet portion of the Do circuit 31 were immediately placed in the circulation beaker 27, causing the bovine blood to circulate. Thereafter, a water removal rate of the F pump 25 was set at 10 mL/ (min·m$^2$), and the pump was started in an ECUM mode.

In this way, 2 L of bovine blood (37°C) was circulated through the passage inner surface side the hollow fiber membrane at a flow rate of 200 mL/min so as to achieve the water removal rate of 10 mL/(min·m$^2$). The dialysis fluid containing part of blood filtered through the hollow fiber membrane is discharged from the outlet 16B for the treatment liquid of the hollow fiber membrane module 23. Part of the discharged dialysis fluid was returned to the circulation beaker through a filtrate circulation circuit 32 via the F pump 25 to prevent the circulating blood from being concentrated. Sampling was respectively performed over time from the inlet side of the Bi circuit 28, the outlet side of the Bo circuit 29, and the outlet side of the Do circuit 31. The blood sampled from each of the Bi circuit 28 and the Bo circuit 29 was centrifuged at 3,000 rpm for 10 minutes, and blood plasma as the supernatant thereof was used as a sample for measurement of an albumin concentration.

Using A/G B Test Wako (manufactured by Wako Pure Chemical Industries, Ltd.), the concentration of albumin was measured. The albumin sieving coefficients (Sc-Alb) after 10 minutes of circulation and after 120 minutes of circulation were calculated by the following equation:

$$\text{Sc - Alb (\%)} = 2\text{CDo}/(\text{CBi} + \text{CBo}) \times 100$$

In the above-mentioned equation, CDo denotes an albumin concentration (g/mL) of a Do circuit outlet (outlet for the treatment liquid of the hollow fiber membrane) side, CBi denotes an albumin concentration (g/mL) of a Bi circuit inlet (inlet for the liquid to be treated of the hollow fiber membrane) side, and CBo denotes an albumin concentration (g/mL) of a Bo circuit outlet (outlet for the treatment liquid of the hollow fiber membrane) side. Using the following equation, a retention ratio of an albumin sieving coefficient was calculated from the value of the albumin sieving coefficient after 10 minutes of the circulation (Sc-Alb(after 10 minutes)) and the value of the albumin sieving coefficient after 120 minutes

of the circulation (Sc-Alb (after 120 minutes)) according to the equation below.

$$\text{Albumin sieving coefficient retention ratio (\%)} = \text{Sc - Alb (after 120 minutes)}/\text{Sc - Alb (after 10 minutes)} \times 100.$$

[Preparation of Biocompatible Copolymer]

Biocompatible copolymer A: A vinylpyrrolidone/vinyl propanoate random copolymer was prepared by the following method.

19.5 Grams of a vinylpyrrolidone monomer, 17.5 g of a vinyl propanoate monomer, 56 g of amyl alcohol as a polymerization solvent, and 0.175 g of 2,2'-azobis(2,4-dimethylvaleronitrile) as a polymerization initiator were mixed, followed by stirring at a temperature of 70°C for 5 hours under nitrogen atmosphere. The reaction solution was cooled to room temperature to stop the reaction, concentrated, and then added to hexane. A precipitated white precipitate was collected and dried under reduced pressure to obtain a vinylpyrrolidone/vinyl propanoate random copolymer. From the measurement results of $^{1}$H-NMR, the mole fraction of a vinyl propanoate unit to the total copolymer was 40%. The weight-average molecular weight thereof was 45,000 from the measurement results of GPC.

A biocompatible copolymer B: an N-isopropylacrylamide/ethyl acrylate random copolymer was prepared by the following method.

5.0 Grams of an N-isopropylacrylamide monomer, 5.0 g of an ethyl acrylate monomer, 30 g of isopropyl alcohol as a polymerization solvent, and 0.070 g of 2,2'-azobis(2,4-dimethylvaleronitrile) as a polymerization initiator were mixed, followed by stirring at a temperature of 70°C for 5 hours under nitrogen atmosphere. The reaction solution was cooled to room temperature to stop the reaction, concentrated, and then added to hexane. A precipitated white precipitate was collected and dried under reduced pressure to obtain an N-isopropylacrylamide/ethyl acrylate random copolymer. The mole fraction of the N-isopropylacrylamide unit to the total copolymer was 50%, and the weight-average molecular weight thereof was 3,000.

[Example 1]

16% By mass of polysulfone ("Udel (registered trademark)" P-3500, manufactured by Solvay S.A.), 4% by mass of polyvinylpyrrolidone (K30, manufactured by International Specialty Products, Inc., hereinafter abbreviated to ISP), 2% by mass of polyvinylpyrrolidone (K90, manufactured by ISP), 77% by mass of N,N-dimethylacetamide, and 1% by mass of water were mixed and dissolved by heating to obtain a membrane forming stock solution.

A mixed solution of 63% by mass of N,N-dimethylacetamide and 37% by mass of water was used as an injection liquid.

The membrane forming stock solution was fed to a spinning spinneret at a temperature of 50°C and discharged through an outside tube of an orifice-type double tube type spinneret with a circular slit part having an outer diameter of 0.35 mm and an inner diameter of 0.25 mm, while the injection liquid was discharged through an inside tube. The discharged membrane forming stock solution was allowed to pass through a dry-zone atmosphere of 350 mm in dry length at a temperature of 30°C and a dew point of 28°C and then to be guided to a coagulation bath with 100% by mass of water at a temperature of 40°C. The hollow fiber membrane was allowed to pass through a water washing step at 60 to 75°C for 90 seconds, a drying step at 130°C for 2 minutes, and a crimping step at 160°C, followed by winding up to obtain a bundle of hollow fiber membranes. The hollow fiber membrane thus obtained had an inner diameter of 200 μm and an outer diameter of 280 μm. The wavelength of the crimp of the hollow fiber membrane was 8.0 mm, while the wave height thereof was 0.3 mm. The hollow fiber membranes were filled in a case such that the effective inner surface area of the hollow fiber membranes (the surface area of parts not coated with a potting material to be added in the subsequent step, of the inner surfaces of the hollow fiber membranes) was 1.5 $m^2$ and the filling rate of the hollow fiber membranes was 58%. Next, both ends of the hollow fiber membranes were fixed to the case ends by potting, and parts of the ends of the potting material were cut to open both ends of the hollow fiber membranes on both sides. Headers were attached to both sides of the case, so that the modularization was performed.

Next, an aqueous solution of 0.03% by mass of the biocompatible copolymer A at 25°C was passed through the hollow fiber membrane inner inlet 15A of the hollow fiber membrane module into the hollow fiber membrane outer outlet 15B at a flow rate of 500 mL/min for 1 minute, and further passed through the hollow fiber membrane inner inlet 15A into the hollow fiber membrane outer nozzle 16A in the direction of membrane thickness at a flow rate of 500 mL/min for 1 minute. Then, a liquid filled through the hollow fiber membrane outer nozzle 16A into the hollow fiber membrane inner inlet 15A was pushed out using compressed air at a pressure of 100 kPa. Thereafter, the filling liquid inside the hollow fiber membrane was then blown and extruded in the direction of the hollow fiber membrane inner inlet 15A through

the hollow fiber membrane outer outlet 15B, thereby bringing only the hollow fiber membranes into a wetted state. Further, the inside and outside of the hollow fiber membranes were simultaneously blown with compressed air at a flow rate of 30 L/min and irradiated with 2.5 kw microwaves, thereby drying the hollow fiber membranes. Here, the water content of the hollow fiber membrane was determined by measuring the mass of the hollow fiber membrane module during the absolute drying and the mass thereof after the drying process, before the washing step. The atmosphere inside the hollow fiber membrane module was substituted with nitrogen and then capped with a rubber stopper, which was impermeable to oxygen. A hollow fiber membrane module A was obtained by irradiating the hollow fiber membrane module in this state with γ-rays at an irradiation dose of 25 kGy. In the obtained hollow fiber membrane module A, the amount of hydrophilic polymer having mobility, the amount of hydrophobic polymer having mobility, the amount of eluted substance, the amount of the biocompatible copolymer introduced into the inner surface of the hollow fiber membrane to be measured using the ATR method, and the retention ratio of the albumin sieving coefficient were measured. The results are shown in Table 1. The amount of eluted substance was small and the retention ratio of the albumin sieving coefficient was also high in the hollow fiber membrane module.

[Example 2]

The same experiment as in Example 1 was performed except for the use of an aqueous solution containing 0.02% by mass of the biocompatible copolymer A at a temperature of 50°C as the aqueous solution of the biocompatible copolymer to obtain a hollow fiber membrane module B. In the obtained hollow fiber membrane module, the amount of hydrophilic polymer having mobility, the amount of hydrophobic polymer having mobility, the amount of eluted substance, the amount of the biocompatible copolymer introduced into the inner surface of the hollow fiber membrane to be measured using the ATR method, and the retention ratio of the albumin sieving coefficient were measured. The results are shown in Table 1. In the hollow fiber membrane module, as in Example 1, the amount of eluted substance was small and the retention ratio of the albumin sieving coefficient was also high.

[Example 3]

The same experiment as in Example 1 was performed except for the use of the biocompatible copolymer B instead of the biocompatible copolymer A to obtain a hollow fiber membrane module B. In the obtained hollow fiber membrane module, the amount of hydrophilic polymer having mobility, the amount of hydrophobic polymer having mobility, the amount of eluted substance, the amount of the biocompatible copolymer introduced into the inner surface of the hollow fiber membrane to be measured using the ATR method, and the retention ratio of the albumin sieving coefficient were measured. The results are shown in Table 1. In the hollow fiber membrane module, as in Example 1, the amount of eluted substance was small and the retention ratio of the albumin sieving coefficient was also high.

[Comparative Example 1]

The same experiment as in Example 1 was performed except for the use of pure water instead of the aqueous solution of the biocompatible copolymer A to obtain a hollow fiber membrane module D. In the obtained hollow fiber membrane module, the amount of hydrophilic polymer having mobility, the amount of hydrophobic polymer having mobility, the amount of eluted substance, the amount of the biocompatible copolymer introduced into the inner surface of the hollow fiber membrane to be measured using the ATR method, and the retention ratio of the albumin sieving coefficient were measured. The results are shown in Table 1. The amount of eluted substance was large and the retention ratio of the albumin sieving coefficient was low in the hollow fiber membrane module.

[Comparative Example 2]

The same experiment as in Example 1 was performed except for the use of an aqueous solution of 0.01% by mass of a vinylpyrrolidone/vinyl acetate (7/3) random copolymer ("KOLLIDON" (registered trademark) VA73, manufactured by BASF Corporation) at a temperature of 50°C instead of the aqueous solution of the biocompatible copolymer A to obtain a hollow fiber membrane module E. In the obtained hollow fiber membrane module, the amount of hydrophilic polymer having mobility, the amount of hydrophobic polymer having mobility, the amount of eluted substance, the amount of the biocompatible copolymer introduced into the inner surface of the hollow fiber membrane to be measured using the ATR method, and the retention ratio of the albumin sieving coefficient were measured. The results are shown in Table 1. The amount of eluted substance was small, but the retention ratio of the albumin sieving coefficient was insufficient in the hollow fiber membrane module.

[Comparative Example 3]

The same experiment as in Example 1 was performed except for setting the water content of the hollow fiber membrane to 200% by mass during irradiation with γ-rays to obtain a hollow fiber membrane module F. In the obtained hollow fiber membrane module, the amount of hydrophilic polymer having mobility, the amount of hydrophobic polymer having mobility, the amount of eluted substance, the amount of the biocompatible copolymer introduced into the inner surface of the hollow fiber membrane to be measured using the ATR method, and the retention ratio of the albumin sieving coefficient were measured. The results are shown in Table 1. Since the water content during the irradiation with γ-rays was high and the cross-linking reaction proceeded, the amount of eluted substance was small, but the retention ratio of the albumin sieving coefficient was insufficient in the hollow fiber membrane module.

[Comparative Example 4]

The same experiment as in Comparative Example 3 was performed except for the use of an aqueous solution of 0.001% by mass of a vinylpyrrolidone/vinyl acetate (6/4) random copolymer ("KOLLIDON" (registered trademark) VA64 manufactured by BASF Corporation) at a temperature of 25°C instead of the aqueous solution of the biocompatible copolymer A to obtain a hollow fiber membrane module G. In the obtained hollow fiber membrane module, the amount of hydrophilic polymer having mobility, the amount of hydrophobic polymer having mobility, the amount of eluted substance, the amount of the biocompatible copolymer introduced into the inner surface of the hollow fiber membrane to be measured using the ATR method, and the retention ratio of the albumin sieving coefficient were measured. The results are shown in Table 1. Since the water content during the irradiation with γ-rays was high and the cross-linking reaction proceeded, the amount of eluted substance was small, but the retention ratio of the albumin sieving coefficient was low in the hollow fiber membrane module.

[Table 1]

| | Hydrophobic polymer | Hydrophilic polymer | Biocompatible copolymer | Carbon number of hydrocarbon group of biocompatible copolymer | Amount of hydrophilic polymer having mobility (% by mass) |
|---|---|---|---|---|---|
| Example 1 | PSU | PVP | Copolymer A | 2 | 1.4 |
| Example 2 | PSU | PVP | Copolymer A | 2 | 1.6 |
| Example 3 | PSU | PVP | Copolymer B | 2 and 3 | 1.3 |
| Comparative Example 1 | PSU | PVP | - | - | 1.5 |
| Comparative Example 2 | PSU | PVP | Copolymer C | 1 | 1.8 |
| Comparative Example 3 | PSU | PVP | Copolymer A | 2 | 0.6 |
| Comparative Example 4 | PSU | PVP | Copolymer D | 1 | 0.9 |

PSU: Polysulfone
PVP: Polyvinylpyrrolidone
Copolymer A: Biocompatible copolymer A (Vinylpyrrolidone/vinyl propanoate random copolymer)
Copolymer B: Biocompatible copolymer B (n-Isopropylacrylamide/ethyl acrylate random copolymer)
Copolymer C: Vinylpyrrolidone/vinyl acetate random copolymer (KOLLIDON® VA73)
Copolymer D: Vinylpyrrolidone/vinyl acetate random copolymer (KOLLIDON® VA64)

[Table 1] (continued)

| | Amount of hydrophobic polymer having mobility (% by mass) | Water content (%) | Oxygen concentration (%) | Amount of eluted substance (mg/md) | ATR measurement ($A_{coo}/A_{cc}$) | Retention ratio of albumin sieving coefficient (%) |
|---|---|---|---|---|---|---|
| Example 1 | 2.3 | 1.4 | 0.03 | 1.0 | 0.07 | 84 |
| Example 2 | 2.2 | 0.8 | 0.03 | 0.8 | 0.06 | 81 |
| Example 3 | 2.3 | 1.1 | 0.03 | 0.7 | 0.07 | 85 |
| Comparative Example 1 | 2.0 | 0.8 | 0.02 | 2.0 | - | 38 |
| Comparative Example 2 | 2.7 | 1.6 | 0.02 | 1.0 | 0.03 | 60 |
| Comparative Example 3 | 2.3 | 200 | 0.03 | 0.6 | 0.04 | 75 |
| Comparative Example 4 | 3.2 | 200 | 0.02 | 0.5 | 0.01 | 65 |

[Reference Signs List]

11: Cylindrical case
13: Hollow Fiber Membrane
14A: Header
14B: Header
15A: Hollow fiber membrane inner surface side inlet (inlet for the liquid to be treated)
15B: Hollow fiber membrane inner surface side outlet (outlet for the liquid to be treated)
16A: Hollow fiber membrane outer surface side nozzle (inlet for the treatment liquid)
16B: Hollow fiber membrane outer surface side nozzle (outlet for the treatment liquid)
17: Potting material
21: Base line
22: Dialysis Apparatus
23: Hollow fiber membrane module
24: Bi pump
25: F pump
26: Waste container
27: Circulation beaker
28: Bi circuit
29: Bo circuit
30: Di circuit
31: Do circuit
32: Filtrate circulation circuit
33: Hot water bath
34: Do circuit chamber
35: Di circuit chamber
36: Bi circuit chamber
37: Bo circuit chamber

## Claims

**1.** A separation membrane module comprising a case and a separation membrane built in the case, wherein the separation membrane module satisfies the following requirements (1) to (3) :

(1) the separation membrane contains a hydrophobic polymer, a hydrophilic polymer, and a biocompatible copolymer, the hydrophilic polymer containing a hydrophilic polymer having mobility,
(2) the separation membrane contains the hydrophilic polymer having mobility in a range of 1.0 to 1.7% by mass, and
(3) a water content per self-weight of the separation membrane is in a range of 0 to 10% by mass.

2. The separation membrane module according to claim 1, wherein the separation membrane is a hollow fiber membrane.

3. The separation membrane module according to claim 1 or 2, wherein the biocompatible copolymer has a hydrocarbon group in a side chain, and the number of carbon atoms of the hydrocarbon group is in a range of 2 to 7.

4. The separation membrane module according to any one of claims 1 to 3, wherein the biocompatible copolymer is at least one selected from the group consisting of a vinylpyrrolidone-vinyl carboxylate copolymer, an N-vinylacetamide-vinyl carboxylate copolymer, an N-alkylacrylamide-acrylic acid ester copolymer, and an N-alkylacrylamide-methacrylic acid ester copolymer.

5. The separation membrane module according to any one of claims 1 to 4, wherein the hydrophilic polymer is at least one selected from the group consisting of polyvinylpyrrolidone, polyethylene glycol, polyvinyl alcohol, and polyacrylamide.

6. The separation membrane module according to any one of claims 1 to 5, wherein the hydrophobic polymer is at least one selected from the group consisting of a polysulfone-based polymer, polystyrene, polyurethane, polyethylene, polypropylene, polycarbonate, polyvinylidene fluoride, polyacrylonitrile, polymethyl methacrylate, polyvinyl chloride, and polyester.

7. The separation membrane module according to any one of claims 2 to 6, wherein after circulating 4 L of ultrapure water heated to 37°C through a passage of an innner surface side of the hollow fiber membrane at a flow rate of 200 mL/min for 4 hours, a resulting liquid is concentrated 100 times and then measured by using gel filtration chromatography to obtain a concentration of eluted substance, and an amount of the eluted substance of the hollow fiber membrane calculated from the obtained concentration of the eluted substance is in a range of 0.0 to 1.0 mg/$m^2$.

8. The separation membrane module according to any one of claims 2 to 7, wherein an inner surface of the hollow fiber membrane is measured by using a total reflection infrared spectroscopy, and when $A_{COO}$) is defined as a peak area surrounded by a base line drawn in a range of wavelengths of 1,711 to 1,759 $cm^{-1}$ and a positive part of a spectrum, while ($A_{CC}$) is defined as a peak area surrounded by a base line drawn in a range of wavelengths of 1,549 to 1,620 $cm^{-1}$ and the positive part of the spectrum, a calculated value of a ratio of ($A_{COO}$) / ($A_{CC}$) is 0.02 or more and 0.5 or less.

9. The separation membrane module according to any one of claims 2 to 8, wherein, when 2 L of bovine blood (37°C) is circulated through a passage of an inner surface side of the hollow fiber membrane at a flow rate of 200 mL/min so as to achieve a water removal rate of 10 mL/ (min·$m^2$), a retention ratio of an albumin sieving coefficient is 76% or more and 100% or less, the retention ratio of the albumin sieving coefficient being defined as a ratio of an albumin sieving coefficient after 120 minutes of the circulation to an albumin sieving coefficient after 10 minutes of the circulation.

10. The separation membrane module according to any one of claims 2 to 9, wherein a filling rate of the hollow fiber membrane is in a range of 50 to 70%.

11. The separation membrane module according to any one of claims 2 to 10, wherein the hollow fiber membrane has a crimping structure with a wavelength in a range of 5 to 10 mm.

12. The separation membrane module according to any one of claims 2 to 11, wherein the hollow fiber membrane has a crimping structure with a wave height in a range of 0.1 to 0.5 mm.

13. A method for manufacturing a separation membrane module in which a separation membrane is built, the separation membrane containing a hydrophobic polymer, a hydrophilic polymer, and a biocompatible copolymer, the method comprising the steps of:

contacting a separation membrane containing the hydrophobic polymer and the hydrophilic polymer with a solution containing the biocompatible copolymer; and
then performing irradiation with radiation such that a water content per self-weight of the separation membrane is in a range of 0 to 10% by mass.

**14.** The method for manufacturing a separation membrane module according to claim 13, wherein the separation membrane is a hollow fiber membrane.

**15.** The method for manufacturing a separation membrane module according to claim 14, wherein the step of contacting the hollow fiber membrane containing the hydrophobic polymer and the hydrophilic polymer with the solution containing the biocompatible copolymer is a step of contacting the hollow fiber membrane and the solution while filtering the solution containing the biocompatible copolymer from an inner surface side to an outer surface side of the hollow fiber membrane or from an outer surface side to an inner surface side of the hollow fiber membrane.

Fig. 1

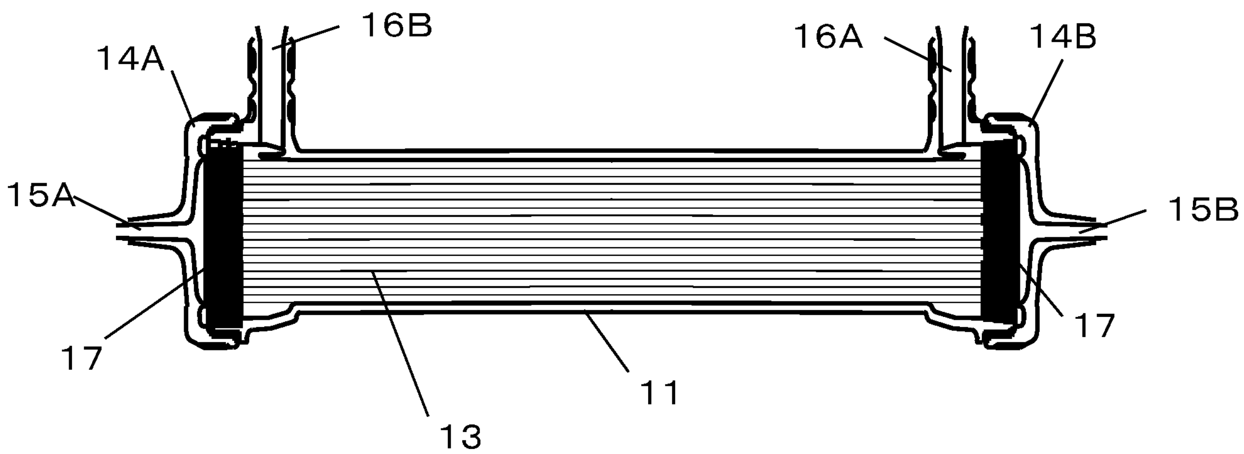
16B
14A
16A
14B
15A
15B
17
17
11
13

Fig. 2

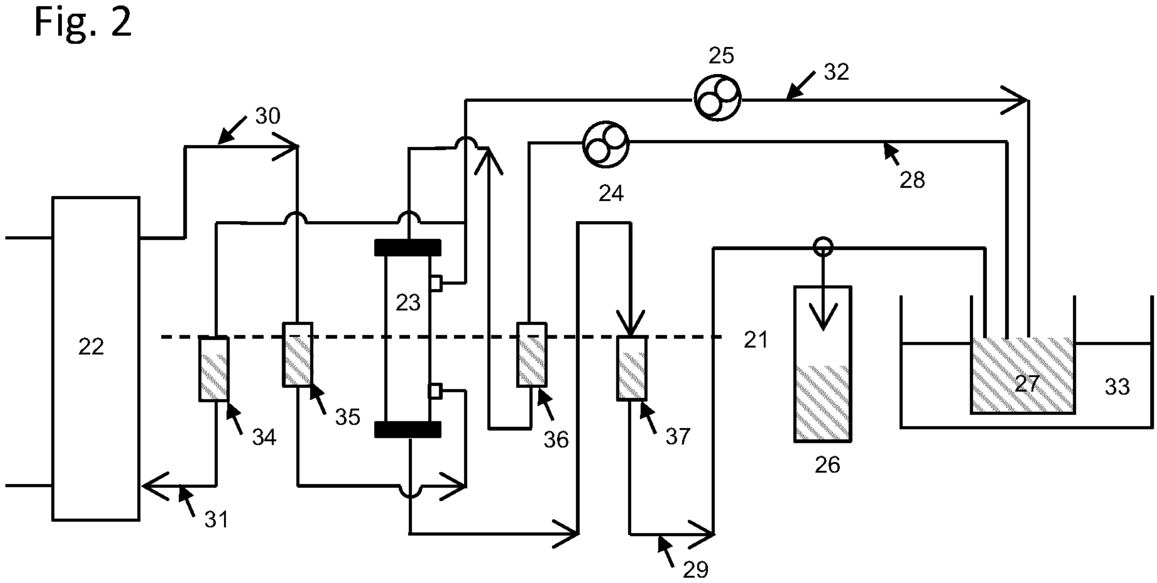
25
32
30
24
28
22
23
21
27
33
34
35
36
37
26
31
29

## INTERNATIONAL SEARCH REPORT

International application No.
PCT/JP2020/001475

### A. CLASSIFICATION OF SUBJECT MATTER

Int. Cl. B01D63/02(2006.01)i, B01D69/02(2006.01)i, B01D69/08(2006.01)i, B01D71/26(2006.01)i, B01D71/28(2006.01)i, B01D71/30(2006.01)i, B1D71/34(2006.01)i, B01D71/38(2006.01)i, B01D71/40(2006.01)i, B01D71/42(2006.01)i, B01D71/44(2006.01)i, B01D71/48(2006.01)i, B01D71/50(2006.01)i, B01D71/52(2006.01)i, B01D71/54(2006.01)i, B01D71/56(2006.01)i, B01D71/68(2006.01)i, D01F1/08(2006.01)i, A61M1/18(2006.01)i
FI: B01D63/02, B01D69/08, B01D69/02, B01D71/26, B01D71/28, B01D71/30, B01D71/34, B01D71/38, B01D71/40, B01D71/42, B01D71/44, B01D71/48, B01D71/50, B01D71/52, B01D71/54, B01D71/56, B01D71/68, A61M1/18 500, D01F1/08

According to International Patent Classification (IPC) or to both national classification and IPC

### B. FIELDS SEARCHED

Minimum documentation searched (classification system followed by classification symbols)
Int. Cl. B01D61/00-71/82, C02F1/44, A61M1/00-1/38

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | WO 2015/170708 A1 (TORAY INDUSTRIES, INC.) 12 November 2015, claims, paragraphs [0022]-[0132] | 1-2, 4-9, 13-15<br>3-12 |
| Y | WO 2018/062451 A1 (TORAY INDUSTRIES, INC.) 05 April 2018, claims, paragraphs [0027]-[0038], [0044], [0045] | 3-12 |
| Y | WO 2016/158388 A1 (TORAY INDUSTRIES, INC.) 06 October 2016, claims, paragraph [0026] | 3-12 |
| Y | JP 2018-086137 A (TORAY INDUSTRIES, INC.) 07 June 2018, claims, paragraphs [0023], [0037]-[0039] | 10-12 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>10.02.2020 | Date of mailing of the international search report<br>25.02.2020 |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

INTERNATIONAL SEARCH REPORT

International application No.
PCT/JP2020/001475

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2012-115743 A (TORAY INDUSTRIES, INC.) 21 June 2012, claims, paragraphs [0010], [0061]-[0066] | 11-12 |
| X | WO 2014/129373 A1 (TORAY INDUSTRIES, INC.) 28 August 2014, claims, example 5, tables 1, 2 | 13-15 |
| A | JP 2011-092928 A (TORAY INDUSTRIES, INC.) 12 May 2011 | 1-15 |
| A | JP 9-323031 A (ASAHI MEDICAL CO., LTD.) 16 December 1997 | 1-15 |
| A | WO 2016/208642 A1 (ASAHI KASEI MEDICAL CO., LTD.) 29 December 2016 | 1-15 |

Form PCT/ISA/210 (continuation of second sheet) (January 2015)

**INTERNATIONAL SEARCH REPORT**
Information on patent family members

International application No.
PCT/JP2020/001475

| Patent Documents referred to in the Report | Publication Date | Patent Family | Publication Date |
|---|---|---|---|
| WO 2015/170708 A1 | 12.11.2015 | US 2017/0072371 A1<br>claims, paragraph [0034]-[0178]<br>EP 3141296 A1<br>KR 10-2016-0149216 A<br>CA 2946527 A1<br>CN 106413866 A<br>JP 2015-226902 A<br>JP 2016-047240 A<br>RU 2016146480 A<br>TW 201600663 A | |
| WO 2018/062451 A1 | 05.04.2018 | EP 3520886 A1<br>claims, paragraph [0027]-[0038], [0044], [0045]<br>TW 201813709 A | |
| WO 2016/158388 A1 | 06.10.2016 | US 2018/0162977 A1<br>claims, paragraph [0049]<br>EP 3279227 A1<br>CA 2975588 A1<br>CN 107406551 A<br>KR 10-2017-0133341 A<br>RU 2017132153 A<br>TW 201642913 A | |
| JP 2018-086137 A | 07.06.2018 | (Family: none) | |
| JP 2012-115743 A | 21.06.2012 | (Family: none) | |
| WO 2014/129373 A1 | 28.08.2014 | US 2015/0343394 A1<br>claims, example 5, tables 1, 2<br>KR 10-2015-0123780 A<br>CA 2893412 A1<br>JP 2018-153638 A<br>TW 201440882 A | |
| JP 2011-092928 A | 12.05.2011 | (Family: none) | |
| JP 9-323031 A | 16.12.1997 | (Family: none) | |
| WO 2016/208642 A1 | 29.12.2016 | US 2018/0185793 A1<br>CN 107735167 A<br>EP 3315190 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5003331 B
- JP 2011092928 A
- WO 2018062451 A
- WO 2014129373 A